(19) Europäisches Patentamt
European Patent Office
Office européen des brevets

(11) EP 0 447 060 B1

(12) **EUROPEAN PATENT SPECIFICATION**

(45) Date of publication and mention
of the grant of the patent:
**10.04.1996 Bulletin 1996/15**

(51) Int Cl.6: **G01N 15/04, B04B 13/00**

(21) Application number: **91301561.6**

(22) Date of filing: **26.02.1991**

(54) **Optimal centrifugal separation**

Optimale zentrifugale Trennung

Séparation optimalisée par centrifugation

(84) Designated Contracting States:
**CH DE FR GB IT LI**

(30) Priority: **12.03.1990 US 492709**

(43) Date of publication of application:
**18.09.1991 Bulletin 1991/38**

(73) Proprietor: **BECKMAN INSTRUMENTS, INC.
Fullerton California 92634 (US)**

(72) Inventor: **Marque, Jeffrey J.
San Mateo, California 94403 (US)**

(74) Representative: **Ede, Eric et al
Fitzpatricks,
4 West Regent Street
Glasgow G2 1RS, Scotland (GB)**

(56) References cited:
**EP-A- 0 344 453          FR-A- 2 500 629**

- **PATENT ABSTRACTS OF JAPAN vol. 7, no. 286
(P-244)(1431) 21 December 1983 & JP -A-58 160
843 (HORIBA SEISAKUSHO) 24 September
1983**
- **L. ZECHMEISTER: "Fortschritte der Chemie
organischer Naturstoffe", volume 20 1962,
SPRINGER, Vienna, pages 372 - 385. J.
VINOGRAD et al.: "Equilibrium sedimentation
of macromolecules and viruses in a density
gradient" SectionsI,II.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Background of the Invention

1. Field of the Invention

The present invention relates to centrifugation and more particularly to the control of rotor speed for controlling concentration variation in a centrifuge chamber.

2. Description of Related Art

Essentially, centrifugation is a process for separating particles suspended in a solution. In biological applications, the particles are usually macromolecules, cells, DNA fragments, etc. There are two primary types of centrifuge procedures, one being "preparative" which is to isolate specific particles, and the other being "analytical" which involves measuring the physical properties of a sedimenting particle.

The device used for centrifugation is a centrifuge which includes a rotor that supports several containers or centrifuge tubes, of sample solution for rotation about a common spin axis. As the rotor spins in the centrifuge, centrifugal force is applied to each particle in the sample solution; each particle will sediment at a rate which is proportional to the centrifugal force applied. The viscosity of the sample solution and the physical properties of the particle also affect the sedimentation rate of each individual particle. For a given centrifugal force, density and liquid viscosity, the sedimentation rate of the particle is proportional to its size (molecular weight), and to the difference between its density and the density of the solution.

One of many methods of centrifugal separation is differential centrifugation, or pelleting. In this method, the centrifuge tube is filled initially with a uniform mixture of sample solution. Through centrifugation, one obtains a separation of two fractions including a pellet containing the sedimented material, and supernatant solution of the unsedimented material. The pellet is a mixture of all of the sedimented components.

Another method of separation is by density gradient centrifugation, a method somewhat more complicated than differential centrifugation, but one which has compensating advantages. Not only does the density gradient method permit the complete separation of several or all of the components in a mixture according to their densities, but it also permits analytical measurements to be made. The density gradient method involves a supporting column of "density gradient" fluid whose density increases toward the bottom of the tube. The density gradient fluid consists of a suitable low molecular weight solute in a solvent in which the sample particles can be suspended.

There are two widely used methods of density gradient centrifugation: rate zonal and isopycnic. In the rate zonal technique, a sample solution containing particles to be separated is layered on a preformed gradient column. Under centrifugal force, the particles will begin sedimenting through the gradient toward the bottom of the centrifuge tube and separate into zones along the tube, each zone consisting of particles characterized by their sedimentation rate. The zones continue to move down the tube with time. To achieve a rate zonal separation, the density of the sample particles must be greater than the density at any specific position along the gradient column, in order for the particles to be able to continue to move down the tube. The run must be terminated before any of the separated zones reaches the bottom of the tube. Otherwise, two or more separated zones will mix at the bottom of the tube.

In the isopycnic technique, the density gradient column encompasses the whole range of densities of the sample particles. Each particle will sediment or float toward a position in the centrifuge tube at which the gradient density is equal to its own density, and there it will remain in equilibrium. The isopycnic technique, therefore, separates particles into zones on the basis of their density differences.

Density gradients can be formed manually by layering density gradient material of gradually decreasing densities in the centrifuge tube. In the isopycnic procedure, it is sometimes easier to start with a uniform solution of the sample and the gradient material. Under the influence of centrifugal force, the gradient material redistributes in the tube so as to form the required concentration (and density) gradient. This is often referred to as the self-generating gradient technique in which a continuous density gradient is formed when the diffusion of the gradient material towards the rotor spin axis balances the sedimentation away from the spin axis at each radial location along the centrifuge tube. Meanwhile, sample particles, which are initially distributed throughout the tube, sediment or float to their isopycnic positions. This self-generating gradient technique often requires long hours of centrifugation.

Generally, centrifugal separation can be effected in less time by centrifuging at higher rotor angular velocity. However, it is limited by the condition that the centrifugal force of the mass of the rotor and its contents at high rotor velocity not exceed the yield stress of the rotor. Furthermore, the rotor angular velocity is also limited by the condition that the solution of the gradient material not attain saturation at the outermost location of the centrifuge tube at any time during centrifugation. This is to avoid the possibility of salt crystallization or precipitation, which involves a process of accumulation of mass as the salt transforms from the dissolved to solid crystalline phase. This can lead to possible rotor failure due to excessive stress on the rotor by the dense crystalline salt.

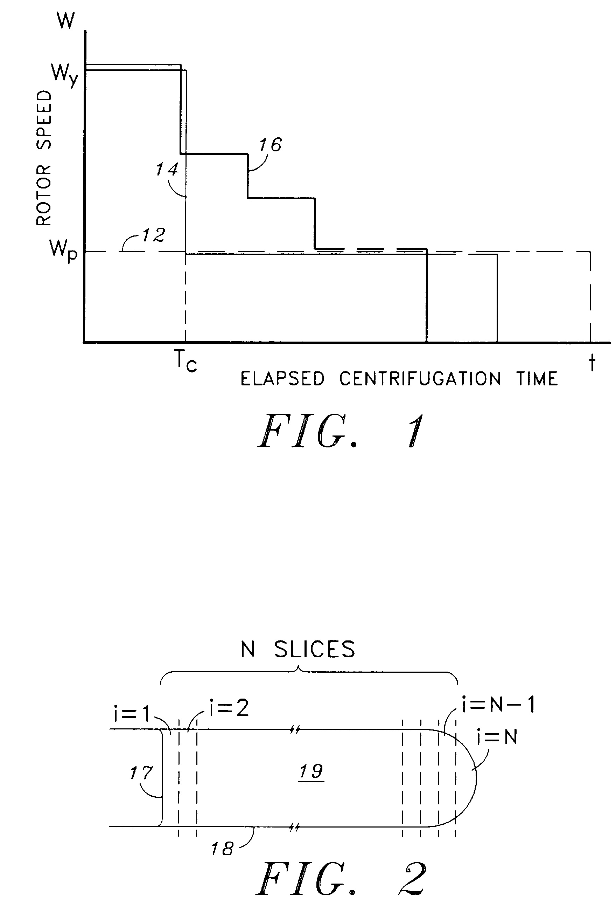

Rotor manufacturers typically provide manuals that contain information regarding the top speed at which the rotor can be safely run for an indefinite period of time, for a given loading concentration, without reaching the gradient salt precipitation threshold. Referring to Fig. 1, $W_p$

represents the speed at which precipitation will never occur for an indefinite period of time for a particular loading density. In the past, a centrifugation run has been carried out at a single speed $W_p$ to safely operate within the precipitation threshold (line 12). A more efficient method would be to run the rotor at the highest speed $W_y$ within the yield stress limit of the rotor, until precipitation is expected to occur at time $T_c$ at which time the rotor speed is reduced to the value $W_p$ which would then not allow precipitation to occur for an indefinite period of time (line 14). Using this method, the total elapsed centrifugation time required for a particular state of separation is less than that in the case of the single speed run. One can also compare the efficiency of the two methods by comparing the integrals of $W^2$ under the operating lines 12 and 14, the larger integral for the same elapsed time being representative of a more efficient centrifugation.

Recently, a new technique was proposed by Chulay et al. in U.S. Patent 4,941,868 which utilizes a dynamic simulation of gradient salt sedimentation to predict the elapsed time at which the precipitation threshold is reached for a number of discrete speeds. The technique requires several speed reductions in coarse steps (line 16) during a run to maintain the gradient salt density within the precipitation threshold. The reduced speeds are designated by the manufacturer and are selected via trial and error to decrease run time. This technique significantly increases the average speed of the rotor above that found in both of the previously described techniques. The amount of time required to attain separation is therefore substantially decreased.

While the technique described in the Chulay et al. patent has been found to be efficient, the process for finding curve 16 is not automated; furthermore the rotor speed has not been optimized to produce the shortest run time. In recent days when centrifugation has quite a few competing technologies for macromolecular separation, automated minimization of the amount of time required for centrifugal separations has become commercially important. Because the technique described in the Chulay et al. patent requires a trial and error approach to selecting the speeds at which centrifugation is to be run, the highest possible speed at a particular elapsed time very often has not been selected.

FR 2500629 discloses an apparatus for determining particle distribution as a function of size in a relatively limited time by simultaneously increasing the rotational speed of a centrifuge rotor and reducing the distance from the rotational axis at which measurements are made. The patent describes how increasing rotational speed of the centrifuge allows measuring the particle distribution of particles having very small diameters, and describes how the radial position, with respect to the rotational axis, of these particles may be determined as a function of rotational speed and time. However, the particular problems of controlling a net flux across a volume element boundary, or the control of the ratio of net fluxes across two such boundaries, are not addressed. Further, the effect of time varying the rotational speeds so as to prevent precipitation of the solute is not addressed.

JP-A-58160843 discloses a similar apparatus to that described above and advocates constantly increasing a rotation speed of a centrifuge over time to shorten the time needed to measure the particle size distribution of a solution. However, this document does not address the particular problems of controlling a net flux across a volume element boundary, or the control of the ratio of net fluxes across two such boundaries. Further, the effect of time varying the rotational speed so as to prevent precipitation in any given volume element is not addressed.

## SUMMARY OF THE INVENTION

The present invention is directed to a method of controlling the rotor speed for centrifugation of a sample solution in accordance with a user specified sedimentation and diffusion to obtain the desired concentration variation in the centrifuge chamber. The rotor speed is automatically controlled to vary practically continuously with time in the method so as to avoid precipitation of the sample solution.

In one aspect of the present invention, the method can be utilized to absolutely minimize the total amount of time for the separation of macromolecules in a density gradient forming solution. Minimizing the separation time is achieved by commencing centrifugation at an angular velocity that is less than but approximately equal to the maximum angular velocity of the rotor. The maximum rotor speed is maintained throughout the centrifugation run subject to a rotor stress constraint on the concentration of the density gradient solution at the outer most location of the sample chamber in the rotor.

Other applications of the method include control of movements of macromolecules by varying rotor speed to obtain a desired time dependent concentration, and control of movements of two or more species by varying rotor speed to obtain a desired concentration ratio between the species at a desired radial location.

According to one aspect of the present invention there is provided a method of centrifuging a sample solution comprising the steps of:

supporting a sample solution in a rotor of a centrifuge, said sample solution having at least one solute component therein,
rotating said sample solution in said rotor at a time dependent variable rotational speed $w$ about a rotational axis, being further characterized by determining and automatically adjusting the rotational speed $w$ as a function of time in order to avoid precipitation of said sample solution independence on the sedimentation and diffusion behaviour of said solute component as a function of rotational speed and time.

According to a further aspect of the present invention there is provided a centrifuge apparatus comprising:

a rotor to support a sample solution for rotation about a rotational axis, said sample solution having at least one solute component therein,

a drive to rotate said sample solution at a time dependent variable rotational speed about the rotational axis, being further characterized by a controller to adjust a rotational speed as a function of time to avoid precipitation of said solute component of said sample solution independence on the sedimentation and diffusion behaviour of said solute component as a function of rotational speed, time and radial position in said sample solution relative to said rotational axis.

BRIEF DESCRIPTION OF THE DRAWINGS

Fig. 1 is a graph showing the rotor speed vs. time of prior art centrifugation methods.

Fig. 2 is a diagram illustrating the mathematical division of a centrifuge tube to aid in the description of the numerical analysis of the present invention.

Fig. 3 is a flowchart of rotor speed control in accordance with one aspect of the present invention.

Fig. 4 is a graph showing rotor speed vs. time of rotor speed control in accordance with one aspect of the present invention.

Fig. 5 is a schematic diagram of a rotor and speed controller.

DESCRIPTION OF THE ILLUSTRATED
EMBODIMENTS

The following description is of the best presently contemplated mode of carrying out the invention. This description is made for the purpose of illustrating the general principles of the invention and should not be taken in a limiting sense. The scope of the invention is best determined by reference to the appended claims.

One aspect of the present invention is a method which absolutely minimizes centrifugation time within the constraint of salt crystallization or precipitation in, for example, a cesium chloride ("CsCl") self-forming density gradient solution. It will be appreciated that the present invention can be practiced with other types of gradient solutions and in other applications such as rate zonal separation. To simplify the description of the present invention, the centrifuge tube used is a cylindrical test tube oriented with its axis horizontal during centrifugation. The analysis below can be applied to other types of centrifuge tubes of different geometry and orientation and other types of rotors.

Referring to Fig. 2, the solution 19 in the centrifuge tube 18 is divided into N slices beginning from the meniscus 17 of the solution. N can be any integer number, the value of which will determine the accuracy of the calculation and the computation time required. Each slice has a finite thickness and volume and is separated from adjacent slices by imaginary boundaries. The governing equation for sedimentation and diffusion is a well known precursor of the Lamm equation:

$$J_{i-1,i} = sW^2 r_{i-1,i} \overline{C_{i-1,i}} - D\bar{v}C_{i-1,i}$$

where $i = 1, ---, N$; $J_{i-1,i}$ is the flux, or time rate of passage of particles per unit area across the boundary separating the (i-1)th and ith slices; $s$ is the sedimentation coefficient of the particles; $W$ is the angular velocity of the rotor; $r_{i-1,i}$ is the radial distance of the boundary separating the (i-1)th and ith slices measured from the axis of rotation; $\overline{C_{i-1,i}}$

is the average concentration of particles in the (i-1)th and ith slices (expressed as number of particles per unit volume); $D$ is the diffusion coefficient for the particles which depends on the size and shape of the particles, the viscosity of the solution and temperature; and $vC_{i-1,i}$ is the "gradient" of the concentration of particles at $r_{i-1,i}$.

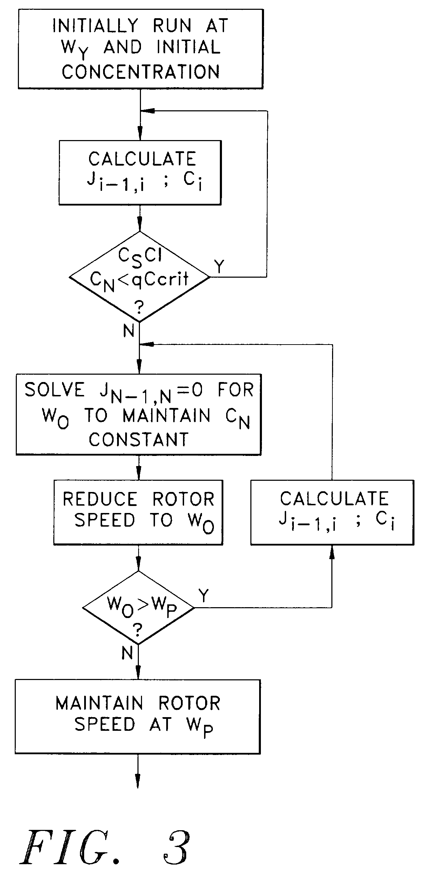

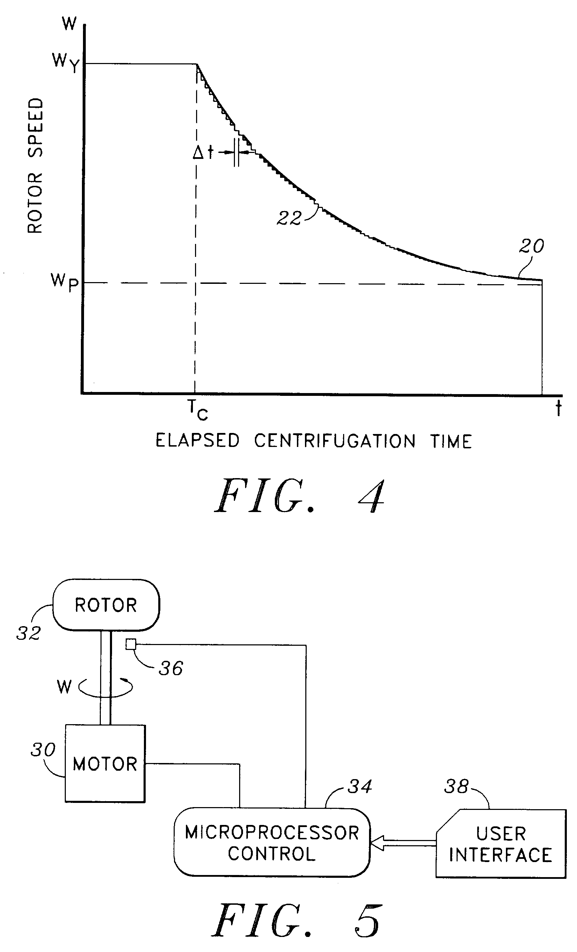

Referring to Figs. 3 and 4 the method for the determination of the optimal rotor speed that will result in the shortest amount of time required for density gradient separations is first outlined. Centrifugation is started at the maximum speed $W_y$ permissible for the particular rotor and average density of the solution. The maximum speed $W_y$ is determined from rotor yield stress specifications provided by the rotor manufacturers. Centrifugation is continued at that speed until the time $t=T_c$ when the concentration $C_N$ of the gradient salt, e.g. CsCl, in the bottom of the tube reaches the critical precipitation threshold value $C_{crit}$ or a value within a desired margin of safety ($q \times C_{crit}$ where $0<q<1$, and in practice q is close to 1). The speed $W_o$ that is required to make the flux $J_{N-1,N}$ into the bottom (Nth) slice equal to exactly zero is then calculated. The rotor speed is then reduced to this new speed $W_o$ thereby keeping the concentration in the bottom slice $C_N$ at or below (close to) the critical precipitation threshold value $C_{crit}$. At each iteration the rotor speed is similarly calculated and reduced so as to maintain the concentration $C_N$ in the bottom slice at or below (close to) precipitation concentration $C_{crit}$ or $q \times C_{crit}$ for all time $t>T_c$. The change in rotor speed with time required to maintain close to critical concentration is best illustrated by line 22 in Fig. 4. The rotor speed is maintained as close as is practical to the critical speed limit; higher speeds would cause precipitation of the gradient material. The smoothness of the curve 22 will depend on the frequency of successive iterations. In theory, a smooth line 20 can be obtained using a large N value and high speed processors.

The premise of this particular aspect of the present invention is based on the observation that after the Nth slice reaches the critical concentration $C_{crit}$ or $q \times C_{crit}$ at $t=T_c$, if the rotor speed is controlled such that the net flux of gradient salt into this slice is zero, then the concentration of the gradient salt at the bottom of the tube cannot ever change after $t=T_c$. Centrifugation can thus be carried out at the highest speeds (shortest time) without fear of precipitation problems.

The steps for obtaining concentration and rotor speed values will now be described in detail. The computer algorithm associated with these steps, however, will not be described since it is merely an exercise of computational programming skills involving conventional numerical computation techniques. A portion of the algorithm is substantially similar to the algorithm used in U.S. Patent 4,941,868, commonly assigned to the assignee of the present application, for transient analysis of centrifugal separation. The relevant portions of said application are incorporated by reference herein.

Given the initial concentrations in each slice, the initial rotor speed $W_y$ consistent with rotor yield stress constraint for the particular average fluid density, and the diffusion and sedimentation constants, the flux $J_{i-1,i}$ across each boundary at each distance $r_{i-1,i}$ can be calculated. As is consistent with finite difference approximation, $\nabla C_{i-1,i}$ is approximated as the difference of the concentrations ($C_{i-1}, C_i$) across adjacent slices divided by a distance measured between the centers of the slices, which in the case of slices of equal thickness equals the thickness of a slice. For initial concentrations in each slice, the simplest example will be the case where the concentrations are the same for each slice as in the case of a homogenous self-forming density gradient solution, e.g. cesium chloride.

The total number of particles that travel across each boundary during the period $\Delta t$ is then simply given by:

$$J_{i-1,i} \cdot A_{i-1,i} \cdot \Delta t$$

where $A_{i-1,i}$ is the area of the boundary between the (i-1)th and ith slices. In the case of the test tube in the example shown in Fig. 2, this area will be the same for all boundaries except for the slices near the bottom of the tube. The total number of particles residing in a particular slice after period $\Delta t$ will be given by {the number of particles originally present} plus {the net number of particles flowing into that slice}. Since the geometry and thus the volume of the slice is known, the new concentration $C_i$ after period $\Delta t$ is given by the total number of particles in the slice divided by the slice volume.

By obtaining the flux at each and every one of the boundaries and subsequently applying the just described steps for calculating the concentrations, one can obtain the new concentration values at any time t, thereby modelling the concentrations of the particles.

The same calculations are repeated after each period $\Delta t$. Each iteration, the concentration values $C_i$ obtained for the preceding $\Delta t$ period are used to obtain the flux values for the current $\Delta t$ period, which in turn are used to obtain a new set of concentration values. This iterative process continues indefinitely until a user specified condition has been met.

For purposes of controlling rotor speed to avoid precipitation of gradient-forming salt, the condition specified is that the concentration in the Nth slice should be less than the concentration at which the density gradient solution will precipitate, and preferably within a margin of safety q. Once this condition has been met at $t=T_c$, the next iteration at $T_c + \Delta t$ requires that the flux $J_{N-1,N}$ into the Nth slice is set to equal exactly zero. One thus solves for $W_o$, a unique rotor speed which will satisfy $J = 0$. In particular, the following equation for the rotor speed, $W_o$, is solved:

$$J_{N-1,N} = sW_o^2 \, r_{N-1,N} \overline{C_{N-1,N}} - D \, (C_{N-1} - C_N)/ r = 0$$

where $J_{N-1,N}$ = the flux through the boundary separating the (N-1)th and Nth slices; $W_o$ = the rotor speed which satisfies the zero flux condition; $C_{N-1}, C_N$ = the concentration of the gradient salt in the (N-1)th and Nth slices, respectively (note that $C_N = q \, C_{crit}$ in the Nth slice);

$\overline{C_{N-1,N}}$ = average concentration in the (N-1)th and Nth slices; $r_{N-1,N}$ = the radial distance of the boundary separating the (N-1)th and Nth slices measured from the axis of rotation; r = distance between midlines of the (N-1)th and Nth slices.

The rotor is slowed down to the new speed $W_o$. As before, the new fluxes and concentration values for all the slices are next calculated, based this time on the new speed value found from $J=0$. Thereafter for each iteration a new rotor speed is calculated. Theoretically, the rotor speed should change (decrease) at each iteration following the first instance at $t=T_c$ when the critical concentration criterion $C_{crit}$ has been met, until $W_p$ (the speed at which precipitation will never occur for an indefinite period of time) has been asymptotically approached. It is understood that the process may be terminated at any time before or after $W_p$ has been reached in accordance with a user specified condition, e.g. a specified elapsed run time.

It can be appreciated that the method of the present invention provides complete automation in optimizing centrifugation (at absolute minimum operating time). The optimized time dependent rotor speed may be predicted through computer simulation and programmed into the control systems of centrifuges which run on variable speed motors, for example, the Optima™ series ultracentrifuges developed and manufactured by Beckman Instruments, Inc. The line 22 in Fig. 4 may be approximated by line 20 which can be expressed as an analytical equation and programmed into the control system of the centrifuge to provide a fine control of the rotor speed. Alternatively, the centrifuge may be controlled under "real-time" calculation of the rotor speed. Depending on the resolution of the motor speed control, centrifugation can be carried out close to the optimum conditions represented by line 20 in Figure 4.

A schematic diagram of the control system of the centrifuge is shown in Fig. 5. A variable speed motor 30 drives the rotor 32 within the chassis (not shown) of the centrifuge. The speed of the motor 30 is controlled by a microprocessor controller 34 in accordance with the technique heretofore described. A speed sensor 36 provides feedback of the rotor speed to the controller 34. Relevant input data such as initial concentration profile, constants and tube geometry are input through user interface 38.

The present invention is not limited to a particular type of rotor or centrifuge tube. Any combination of rotor, centrifuge tube, loading configuration of the density gradient solution can be simulated and controlled using the method of the present invention.

The thickness and the boundary area may be different for each slice for tubes with special geometry. To improve the resolution and accuracy of the process, the time interval $\Delta t$ between each iteration may be different for different rotors and/or different time segments in the process; for example it is preferred to have very small time intervals for the first few iterations to avoid singularities in the numerical integration.

It is noted that in the foregoing description of the method, the flux analysis begins at a given initial rotor speed. In an actual centrifugation run, however the rotor speeds up from rest to such "initial speed". However, the time taken to do this is negligible compared to the total run time and the transient sedimentation and diffusion flows during this start-up period is negligible. The start-up period therefore can be ignored to a good approximation. One can of course include flux analysis of the start-up period for marginal improvement in precision.

Using similar flux analysis as described above, it is possible to specify the condition that the concentration of a component of the sample solution in any slice should vary as a specified function of time f(t) where

$$\text{(slice volume)} \times \frac{dC_i}{dt} = J_{i-1,i}A_{i-1,i} - J_{i,i+1}A_{i,i+1} = f(t)$$

This might be useful for example in analytical centrifugation in which the sample solution in the centrifuge chamber is observed during centrifugation to studying its sedimentation behavior. Another application of the present invention is to control the ratio of the influx of two or more macromolecules, e.g., DNA particles types A and B, at a particular radial location in the centrifuge tube. The ratio of concentrations of the macromolecules can be specified to vary as a function of time:

$$\frac{\Delta[C_i]A}{\Delta[C_i]B} = \frac{[J_{i-1,i}A_{i-1,i} - J_{i,i+1}A_{i,i+1}]_A}{[J_{i-1,i}A_{i-1,i} - J_{i,i+1}A_{i,i+1}]_B} = f(t).$$

Both of the above applications are implemented by varying the rotor speed with time. Instead of solving for $J_{N-1,N} = 0$ for $W_o$ as in the control of critical concentration described earlier, the solutions of the flux equations yield rotor speeds that satisfy the specified f(t).

While the invention has been described with respect to the preferred embodiments in accordance therewith, it will be apparent to those skilled in the art that various modifications and improvements may be made without departing from the scope of the invention. Accordingly, it is to be understood that the invention is not to be limited by the specific illustrated embodiments, but only by the scope of the appended claims.

## Claims

1. A method of centrifuging a sample solution (19) comprising the steps of:

supporting a sample solution in a rotor of a centrifuge, said sample solution having at least one solute component therein,
rotating said sample solution in said rotor at a time dependent variable rotational speed w about a rotational axis, being further characterized by determining and automatically adjusting the rotational speed $w$ as a function of time in order to avoid precipitation of said sample solution independence on the sedimentation and diffusion behaviour of said solute component as a function of rotational speed and time.

2. The method of claim 1 wherein said sedimentation and diffusion behaviour includes time-dependent concentrations $C_i$ $(i=1,2,...,N)$ of the solute component at radial positions $r_i$ in said sample solution relative to said rotational axis and time-dependent flux $J_{i,i+1}$ of said solute component from each said radial position $r_i$ to a radially adjacent position $r_{i+1}$ in said sample solution, and further comprising the steps of:

specifying a set of conditions on said sedimentation and diffusion behaviour which are to be satisfied, said set of conditions including at least one condition on one of said concentrations and flux of said solute component which is to be satisfied of at least one radial position in said sample solution in order to avoid precipitation of said solute component from said sample solution, and
simulating said sedimentation and diffusion behaviour of said solute component of said sample solution as a function of rotational speed and time, said simulating including computing, in each of a plurality of successive time intervals, the flux $J_{i,i+1}$ as a function of rotational speed $w$ of said solute component during the time interval between each pair of radially adjacent positions $r_i$ and $r_{i+1}$ in said sample solution, and the corresponding concentration $C_i$ of said solute component during the next successive time interval at each radial position $r_i$ in said sample solution that results from said flux, wherein said step of determining and automatically adjusting the rotational speed $w$ includes determining, in each of said plurality of successive time intervals, from said simulated sedimentation and diffusion behaviour, a maximum rotational speed during said time interval that satisfies said specified set of conditions, and adjusting said time dependent variable rotational speed to substantially equal to the latest maximum rotational speed that has been determined.

3. The method of claim 1 wherein said sample solution includes a solute and a solvent contained in a centrifuge tube, and further including the step of dividing, for computational purposes, the contents of the centrifuge tube into a plurality of slice volumes with each of said plurality of slice volumes being approximately a fixed radial distance $r=r_i$ ($i=1,2,...,N$) from the rotational axis, where one of said plurality of slice volumes has the largest associated radial distance $r=r_N$ from the rotational axis, and the rotating step includes rotating a centrifuge tube about its rotational axis at an angular velocity $w = w(t)$ as a function of time t to produce a flux $J_{i,i+1}(t)$ of solute particles between adjacent slice volumes so that concentration $C_i(t)$ of solute in a slice volume varies with time, and said determining step includes automatically adjusting the angular velocity $w(t)$ as a function of time t so that $C_N(t)$ of the net flux of the solute into the slice volume with associated radial distance $r=r_N$ computed as the angular velocity $w(t)$, for rotation of the centrifuge tubes, increases with time to a predetermined critical $C_{crit}$ at a determinable time $t=T_c$ and does not increase above the value $C_{crit}$ for any time t greater than $T_c$.

4. The method of claim 1 with said sample solution comprising a solute and a solvent contained in a centrifuge tube and further including a step of dividing, for computational purposes, the contents of the centrifuge tube into a plurality of slice volume elements with each of said plurality of slice volume elements being approximately a fixed radial distance $r=r_i$ ($i=1,2,...,N$) from the rotational axis, where at least one of said plurality of slice volume elements has a largest associated radial distance $r=r_N$ from the rotational axis, wherein said step of rotating said sample solution in said rotor includes rotating the centrifuge tube about its rotational axis at an angular velocity $w = w(t)$ as a function of time t to produce a time dependent flux $J_{i-1,i}$ of solute particles between adjacent slice volume elements $\Delta V_{i-1}$ and $\Delta V_i$ and a time dependent flux $J_{i,i+1}$ of solute particles between adjacent slice volume elements $\Delta V_i$ and $\Delta V_{i+1}$ so that the concentration $C_i(t)$ of solute in a slice volume element $\Delta V_i$ varies with time, and said determining step include automatically adjusting the angular velocity $w(t)$ as a function of time t so that the net flux of solute particles into the volume element $\Delta V_i$, computed using the angular velocity $w(t)$ for rotation of centrifuge tube, varies with time as a predetermined function f(t) of time.

5. The method of claim 1 with said sample solution comprising first and second solutes in a solvent contained in a centrifuge tube and further including the step of dividing, for computational purposes, the contents of the centrifuge tube into a plurality of slice volumes, with each of said plurality of volumes being approximately a fixed radial distance $r=r_i$ ($i=1,2,...,N$) from the spin axis, where at least one of said plurality of slice volumes has a largest associated radial distance $r=r_N$ from the rotational axis, wherein said step of rotating said sample solution in a rotator includes rotating the centrifuge tube about its rotational axis at an angular velocity $w = w(t)$ as a function of time t to produce a net flux of first solute particles A into a predetermined slice volume, and a net flux of second solute particles B into the same slice volume, said determining step including automatically adjusting the angular velocity $w(t)$ as a function of time t so that the ratio of the net flux of the first solute particles A to the net flux of the second particles B into the predetermined slice volume computed using the angular velocity $w(t)$ for rotation of the centrifuge tube, varies with time as a predetermined function f(t) of time.

6. The method of claim 2 wherein said set of conditions includes a concentration-independent condition that said rotational speed $w$ have an upper limit for which a yield stress limit of said rotor is not exceeded.

7. The method of claim 2 wherein said at least one condition is that for $i=k$ the concentration $C_k$ of said solute component at a specified radial position $r_k$ in said sample solution relative to said rotating axis vary according to a particular specified function of time f(t).

8. The method of claim 7 wherein $i=k=N$, where $r_N$ is a position in said sample solution farthest from said rotational axis.

9. The method of claim 8 wherein for $i=N$ the concentration $C_N$, defined by said function f(t), increases for time $0<t<T_c$ until said concentration $C_N$ reaches a value of q x $C_{crit}$ in a time interval $T_c$, where q is a specified safety margin with $0<q\leq1$ and $C_{crit}$ is a critical concentration at which said solute component precipitates from said sample solution, and wherein said concentration $C_N$ is substantially constant at q x $C_{crit}$ for time intervals $t>T_c$, whereby said solute component is prevented from precipitating.

10. The method of claim 2 wherein said at least one condition is that for $i=k$ the flux $J_{k-1,k}$ of said solute component from a specified radial position $r_{k-1}$ to a radially adjacent position $r_k$ in said sample solution vary according to a particular function of time f(t).

11. The method of claims 7 or 10 wherein i=k=N where $r_N$ is the position in said sample solution furthest from said rotational axis.

12. The method of claim 11 wherein for i=N the flux $J_{N-1,N}$, defined by said function f(t), is substantially zero for time t>$T_c$ after a time interval $T_c$ in which the concentration $C_N$ in said solute component at said specified position $r_N$ reaches a value of q x $C_{crit}$, where q is a specified safety margin with 0<q≤1 and $C_{crit}$ is a critical concentration at which said solute component precipitates from said sample solution.

13. The method of claim 1 further comprising the step of causing said angular velocity w(t) to have an initial value that is less than, but approximately equal to, the maximum angular velocity $w = w_y$ permitted to preserve the structural integrity of said rotor mechanism.

14. The method of claim 1 further comprising the step of holding said angular velocity w(t) approximately constant at $w(t) = w_y$ for all times t up to said time t=$T_c$.

15. A centrifuge apparatus comprising:

a rotor (32) to support a sample solution (19) for rotation about a rotational axis, said sample solution having at least one solute component therein,
a drive (30) to rotate said sample solution at a time dependent variable rotational speed about the rotational axis, being further characterized by a controller (34) to adjust a rotational speed as a function of time to avoid precipitation of said solute component of said sample solution independence on the sedimentation and diffusion behaviour of said solute component as a function of rotational speed, time and radial position in said sample solution relative to said rotational axis.

16. The apparatus of claim 15 wherein said sample solution includes a solvent and a solute with the rotor rotating the sample solution about the rotational axis, the rotor having at least one slice volume containing said sample solution with a radial distance $r_N$ from the rotational axis that is at least as large as a radial distance $r_i$ (i=1,2,...,N) from the rotational axis of any other slice volume of the rotor, with the drive, connected to the rotor, for rotating the rotor about the rotational axis with a time varying angular velocity $w = w(t)$ to produce a flux of solute particles between different portions of the rotor, wherein the controller is connected to the drive for automatically adjusting the angular velocity w(t) as a function of time t so the net flux $J_i$ of solute particles into the any other slice volume varies as a predetermined function of time f(t).

17. The apparatus of claim 16 wherein the controller adjusts the angular velocity w(t) as a function of time t so that concentration $C_N$ of solute particles in the slice volume with the radial distance $r_N$ increases with time to a predetermined $C_{crit}$ at a determinable time t=$T_c$ and does not increase above the value $C_{crit}$ for any time greater than $T_c$.

18. The apparatus of claim 16 with said sample solution including a solvent and first and second solutes, the rotor having a plurality of slice volumes at various radial distances containing a sample solution whose radial distance $r_N$ from the rotational axis is at least as large as the radial distance $r_i$ from the rotational axis of any other volume element of the rotor, wherein said controller is connected to the drive for automatically adjusting the angular velocity w(t) as a function of time t so that the ratio of the net flux of first solute particles into a predetermined slice volume to the net flux of second solute particles into the same predetermined volume element varies as a predetermined function of time f(t).

19. The apparatus of claims 16, 17 or 18, wherein said controller causes said angular velocity w(t) to have an initial value that is less than, but approximately equal to, the maximum angular velocity $w = w_y$ permitted to preserve the structural integrity of said rotor mechanism.

20. The apparatus of claims 16, 17 or 18, wherein said controller causes said angular velocity w(t) to be approximately constant at $w(t) = w_y$ for all times t up to said time t=$T_c$.

**Patentansprüche**

1. Verfahren zum Zentrifugieren einer Probenlösung (19), umfassend die Schritte:

- Anbringen einer Probenlösung in einem Rotor einer Zentrifuge, wobei die genannte Probenlösung wenigstens eine Lösstoffkomponente enthält,

- Rotation der genannten Probenlösung in dem genannten Rotor mit einer zeitabhängig veränderlichen Rotationsdrehzahl w um eine Rotationsachse, des weiteren dadurch gekennzeichnet, daß man die Rotationsdrehzahl w bestimmt und automatisch gemäß einer Zeitfunktion einstellt, um eine Ausfällung der genannten Probenlösung in Abhängigkeit von dem Sedimentations- und Diffusionsverhalten der genannten Lösstoffkomponente als Funktion der Rotationsdrehzahl und -zeit zu vermeiden.

2. Verfahren nach Anspruch 1, bei welchem das genannte Sedimentations- und Diffusionsverhalten zeitabhängige Konzentrationen $C_i$ ($i = 1, 2, ..., N$) der Lösstoffkomponenten an radialen Stellen $r_i$ in der genannten Probenlösung, bezogen auf die Rotationsachse, sowie einen zeitabhängigen Fluß $J_{i, i+1}$ der genannten Lösstoffkomponente aus jeweils jeder der genannten Radialstellungen $r_i$ in eine radial benachbarte Stellung $r_{i+1}$ in der genannten Probenlösung umfaßt, das Verfahren des weiteren umfassend die Schritte:

- Aufstellen eines Satzes von Zustandsbedingungen für das genannte Sedimentations- und Diffusionsverhalten, die erfüllt werden sollen, wobei der genannte Satz von Zustandsbedingungen wenigstens eine Bedingung für eine der genannten Konzentrationen und Flüsse der genannten Lösstoffkomponente umfaßt, die bei wenigstens einer radialen Stellung in der Probenlösung erfüllt sein sollen, um eine Ausfällung der genannten Lösstoffkomponente aus der genannten Probenlösung zu vermeiden, und

- Simulation des genannten Sedimentations- und Diffusionsverhaltens der genannten Lösstoffkomponente der genannten Probenlösung als Funktion der Rotationsdrehzahl und -zeit, wobei die genannte Simulation die Berechnung jeweils in jedem einer Mehrzahl aufeinanderfolgender Zeitintervalle des Flusses $J_{i,i+1}$ als Funktion der Rotationsdrehzahl w der genannten Lösstoffkomponente während des Zeitintervalls zwischen jedem Paar von radial benachbarten Stellungen $r_i$ und $r_{i+1}$ in der genannten Probenlösung und der entsprechenden Konzentration $C_i$ der genannten Lösstoffkomponente während des nächstfolgenden Zeitintervalls bei jeweils jeder Radialstellung $r_i$ in der genannten Probenlösung, die sich aus diesem Fluß ergibt, umfaßt,

- wobei der genannte Schritt der Bestimmung und automatischen Einstellung der Rotationsdrehzahl w umfaßt, daß jeweils in jedem der genannten Vielzahl aufeinanderfolgender Zeitintervalle aus dem genannten simulierten Sedimentations- und Diffusionsverhalten eine maximale Rotationsdrehzahl während des genannten Zeitintervalls, welche den genannten vorgegebenen Satz von Zustandsbedingungen erfüllt, bestimmt und die genannte zeitabhängig variable Rotationsdrehzahl so eingestellt wird, daß sie im wesentlichen gleich der zuletzt bestimmten maximalen Rotationsdrehzahl ist.

3. Verfahren nach Anspruch 1, bei welchem die genannte Probenlösung einen Lösstoff ('solute') und ein Lösungsmittel in einem Zentrifugenrohr enthalten aufweist, des weiteren umfassend den Schritt, daß für Berechnungszwecke der Inhalt des Zentrifugenrohrs in eine Mehrzahl von Scheibenvolumina unterteilt wird, wobei jeweils jedes der genannten mehreren Scheibenvolumina annähernd in einem festen Radialabstand $r = r_i$ ($i = 1, 2, ..., N$) von der Rotationsachse liegt, wobei eines der genannten Mehrzahl von Scheibenvolumina den größten zugeordneten Radialabstand $r = r_N$ von der Rotationsachse aufweist, und wobei der Verfahrensschritt der Rotation die Rotation eines Zentrifugenrohrs um seine Rotationsachse mit einer Winkelgeschwindigkeit $w = w(t)$ als Funktion der Zeit t zur Erzeugung eines Flusses $J_{i,i+1}(t)$ von Lösstoffteilchen zwischen benachbarten Scheibenvolumina umfaßt, derart, daß die Konzentration $C_i(t)$ von Lösstoff in einem Scheibenvolumen sich zeitlich verändert, und daß der Verfahrensschritt der Bestimmung die automatische Einstellung der Winkelgeschwindigkeit $w(t)$ als Funktion der Zeit t umfaßt, derart, daß $C_N(t)$ des Netto-Flusses des Lösstoffs in das Scheibenvolumen mit dem zugeordneten radialen Abstand $r = r_N$ bei der Rotation der Zentrifugenrohre mit der Zeit auf einen vorgegebenen kritischen Wert $C_{crit}$ bei einer bestimmbaren Zeit $t = T_c$ zunimmt und für jede beliebige Zeit t größer als $T_c$ nicht über den Wert $C_{crit}$ ansteigt.

4. Verfahren nach Anspruch 1, wobei die genannte Probenlösung einen Lösstoff und ein Lösungsmittel, enthalten in einem Zentrifugenrohr, umfaßt, das Verfahren des weiteren enthaltend einen Verfahrensschritt, wonach für Berechnungszwecke der Inhalt des Zentrifugenrohrs in eine Mehrzahl von Scheibenvolumenelementen unterteilt wird, wobei jeweils jedes der genannten Mehrheit von Scheibenvolumenelementen annähernd in einem festen radialen Abstand $r = r_i$ ($i = 1, 2, ..., N$) von der Rotationsachse liegt, wobei wenigstens eines der genannten Mehrzahl von Scheibenvolumenelementen einen größten zugeordneten Radialabstand $r = r_N$ von der Rotationsachse besitzt, wobei der genannte Schritt der Rotation der genannten Probenlösung in dem genannten Rotor eine Rotation des Zentrifugenrotors um dessen Rotationsachse mit einer Winkelgeschwindigkeit $w = w(t)$ als Funktion der Zeit t umfaßt, zur Erzeugung eines zeitabhängigen Flusses $J_{i-1,i}$ von Lösstoffteilchen zwischen benachbarten Scheibenvolumenelementen $\Delta V_{i-1}$ und $\Delta V_i$ und eines zeitabhängigen Flusses $J_{i,i+1}$ von Lösstoffteilchen zwischen benachbarten Scheibenvolumenelementen

$\Delta V_i$ und $\Delta V_{i+1}$, derart, daß die Konzentration $C_i(t)$ von Lösstoff in einem Scheibenvolumenelement $\Delta V_i$ mit der Zeit veränderlich ist, und wobei der genannte Verfahrensschritt der Bestimmung die automatische Einstellung der Winkelgeschwindigkeit $w(t)$ als Funktion der Zeit $t$ umfaßt, derart, daß der Netto-Fluß an Lösstoffteilchen in das Volumenelement $\Delta V_i$, berechnet unter Verwendung der Winkelgeschwindigkeit $w(t)$ für die Drehung des Zentrifugenrohrs, sich zeitlich gemäß einer vorgegebenen Funktion $f(t)$ der Zeit ändert.

5. Verfahren nach Anspruch 1, bei welchem die genannte Probenlösung einen ersten und einen zweiten Lösstoff in einem Lösungsmittel, enthalten in einem Zentrifugenrohr, aufweist, das Verfahren des weiteren umfassend einen Verfahrensschritt, wonach für Berechnungszwecke der Inhalt des Zentrifugenrohrs in eine Mehrzahl von Scheibenvolumina unterteilt wird, wobei jeweils jedes der genannten Mehrzahl von Volumina annähernd in einem festen radialen Abstand $r = r_i$ ($i = 1, 2, ..., N$) von der Umlaufachse liegt, wobei wenigstens eines der genannten Mehrzahl von Scheibenvolumina einen größten zugeordneten radialen Abstand $r = r_N$ von der Rotationsachse besitzt, wobei der genannte Verfahrensschritt der Rotation der genannten Probenlösung in einem Rotor die Rotation des Zentrifugenrohrs um dessen Rotationsachse mit einer Winkelgeschwindigkeit $w = w(t)$ als Funktion der Zeit umfaßt, zur Erzeugung eines Netto-Flusses von ersten Lösstoffteilchen A in ein vorgegebenes Scheibenvolumen hinein, und eines Netto-Flusses von zweiten Lösstoffteilchen B in das gleiche Scheibenvolumen hinein, wobei der genannte Verfahrensschritt des Bestimmens eine automatische Einstellung der Winkelgeschwindigkeit $w(t)$ als Funktion der Zeit umfaßt, derart, daß das Verhältnis des Netto-Flusses der ersten Lösstoffteilchen A zum Netto-Fluß der zweiten Lösstoffteilchen B in das vorgegebene Scheibenvolumen hinein, berechnet unter Verwendung der Winkelgeschwindigkeit $w(t)$ für die Rotation des Zentrifugenrohrs, sich zeitlich gemäß einer vorgegebenen Funktion $f(t)$ der Zeit ändert.

6. Verfahren nach Anspruch 2, bei welchem der genannte Satz von Zustandsbedingungen eine konzentrationsunabhängige Bedingung aufweist, daß die genannte Rotationsdrehzahl $w$ eine obere Grenze besitzt, für welche eine Fließgrenze des genannten Rotors nicht überschritten wird.

7. Verfahren nach Anspruch 2, bei welchem der genannte wenigstens eine Zustand der ist, daß für $i = k$ die Konzentration $C_k$ der genannten Lösstoffkomponente bei einer gegebenen Radialstellung $r_k$ in der genannten Probenlösung relativ bezüglich der genannten Rotationsachse sich gemäß einer bestimmten vorgegebenen Funktion der Zeit $f(t)$ verändert.

8. Verfahren nach Anspruch 7, bei welchem $i = k = N$, wobei $r_N$ eine von der genannten Rotationsachse am weitesten entfernte Stelle in der genannten Probenlösung ist.

9. Verfahren nach Anspruch 8, bei welchem für $i = N$ die durch die genannte Funktion $f(t)$ definierte Konzentration $C_N$ während der Zeit $0 < t < T_c$ zunimmt, bis die genannte Konzentration $C_N$ in einem Zeitintervall $T_c$ einen Wert $q \times C_{crit}$ erreicht, wobei $q$ ein vorgegebener Sicherheitsabstand mit $0 < q \leq 1$ ist und $C_{crit}$ eine kritische Konzentration ist, bei welcher die genannte Lösstoffkomponente aus der genannten Probenlösung ausfällt, und wobei die genannte Konzentration $C_N$ für Zeitintervalle $t > T_c$ im wesentlichen konstant $q \times C_{crit}$ beträgt, derart, daß die genannte Lösstoffkomponente an einer Ausfällung gehindert wird.

10. Verfahren nach Anspruch 2, bei welchem die genannte wenigstens eine Zustandsbedingung die ist, daß für $i = k$ der Fluß $J_{k-1,k}$ der genannten Lösstoffkomponente aus einer gegebenen Radialstellung $r_{k-1}$ in eine radial benachbarte Lage $r_k$ in der genannten Probenlösung sich gemäß einer bestimmten Zeitfunktion $f(t)$ verändert.

11. Verfahren nach den Ansprüchen 7 oder 10, bei welchem $i = k = N$ ist, wobei $r_N$ die von der genannten Rotationsachse am weitesten entfernte Stelle in der genannten Probenlösung ist.

12. Verfahren nach Anspruch 11, bei welchem für $i = N$ der durch die genannte Funktion $f(t)$ bestimmte Fluß $J_{N-1,N}$ für die Zeit $t > T_c$ nach einem Zeitintervall $T_c$ im wesentlichen Null ist, in welchem die Konzentration $C_N$ der genannten Lösstoffkomponente bei der genannten angegebenen Stelle $r_N$ einen Wert $q \times C_{crit}$ erreicht, wobei $q$ ein vorgegebener Sicherheitsabstand mit $0 < q \leq 1$ und $C_{crit}$ eine kritische Konzentrations ist, bei welcher die genannte Lösstoffkomponente aus der genannten Probenlösung ausfällt.

13. Verfahren nach Anspruch 1, des weiteren umfassend einen Verfahrensschritt, wonach die genannte Winkelgeschwindigkeit $w(t)$ zur Annahme eines Anfangswerts veranlaßt wird, der kleiner als die, aber annähernd gleich der zur Bewahrung der baulich konstruktiven Integrität des genannten Rotormechanismus zulässigen Winkelgeschwindigkeit $w = w_y$ ist.

14. Verfahren nach Anspruch 1, des weiteren umfassend den Verfahrensschritt, wonach die genannte Winkelgeschwindigkeit w(t) für alle Zeiten t bis zu dem genannten Zeitpunkt $t = T_c$ annähernd konstant bei $w(t) = w_y$ ist.

15. Zentrifugenapparatur, umfassend:

- einen Rotor (32) zur Aufnahme einer Probenlösung (19) für Rotation um eine Rotationsachse, wobei die genannte Probenlösung wenigstens eine Lösstoffkomponente enthält,

- einen Antrieb (30) zur Rotation der genannten Probenlösung mit einer zeitabhängig veränderlichen Drehzahl um die genannte Rotationsachse, des weiteren gekennzeichnet durch eine Steuer- bzw. Regelvorrichtung (34) zur Einstellung einer Rotationsdrehzahl als einer Funktion der Zeit zur Vermeidung von Ausfällung der genannten Lösstoffkomponente der genannten Probenlösung in Abhängigkeit von dem Sedimentations- und Diffusionsverhalten der genannten Lösstoffkomponente als Funktion der Drehzahl, der Zeit und der Radialstellung in der genanntenn Probenlösung relativ bezüglich der Rotationsachse.

16. Apparatur nach Anspruch 15, bei welcher die genannte Probenlösung ein Lösungsmittel und einen Lösstoff enthält und der Rotor die Probenlösung um die genannte Rotationsachse rotiert, wobei der Rotor wenigstens ein die genannte Probenlösung enthaltendes Scheibenvolumen in einem radialen Abstand $r_N$ von der Rotationsachse enthält, der wenigstens ebenso groß wie der Radialabstand $r_i$ (i = 1, 2, ..., N) jedes beliebigen anderen Scheibenvolumens des Rotors ist, mit einem mit dem Rotor verbundenen Antrieb zur Rotation des Rotors um die Rotationsachse mit einer zeitveränderlichen Winkelgeschwindigkeit $w = w(t)$ zur Erzeugung eines Flusses von Lösstoffteilchen zwischen unterschiedlichen Bereichen des Rotors, wobei die Steuer- bzw. Regelvorrichtung mit dem Antrieb zur automatischen Einstellung der Winkelgeschwindigkeit w(t) als Funktion der Zeit t verbunden ist, derart, daß der Netto-Fluß $J_i$ von Lösstoffteilchen in irgendein anderes Scheibenvolumen sich gemäß einer vorgegebenen Funktion der Zeit f(t) ändert.

17. Apparatur nach Anspruch 16, bei welcher die Steuer- bzw. Regelvorrichtung die Winkelgeschwindigkeit w(t) als Funktion der Zeit t so einstellt, daß die Konzentration $C_N$ von Lösstoffteilchen in dem Scheibenvolumen mit dem radialen Abstand $r_N$ mit der Zeit auf einen vorgegebenen Wert $C_{crit}$ bei einer bestimmbaren Zeit $t = T_c$ zunimmt und für jede Zeit größer als $T_c$ nicht über den Wert $C_{crit}$ zunimmt.

18. Apparatur nach Anspruch 16, bei welcher die genannte Probenlösung ein Lösungsmittel und einen ersten und einen zweiten Lösstoff enthält, der Rotor eine Mehrzahl von eine Probenlösung enthaltenden Scheibenvolumina bei verschiedenen radialen Abständen besitzt, deren radialer Abstand $r_N$ von der Rotationsachse wenigstens so groß wie der Radialabstand $r_i$ jedes anderen Volumenelements des Rotors von der Rotationsachse ist, wobei die genannte Steuer- bzw. Regelvorrichtung mit dem Antrieb verbunden ist zur automatischen Einstellung der Winkelgeschwindigkeit w(t) als Funktion der Zeit t, derart, daß das Verhältnis des Netto-Flusses von ersten Lösstoffteilchen in ein vorgegebenes Scheibenvolumen zum Netto-Fluß der zweiten Lösstoffteilchen in das gleiche vorbestimmte Volumenelement sich gemäß einer vorgegebenen Funktion der Zeit f(t) ändert.

19. Apparatur nach den Ansprüchen 16, 17 oder 18, bei welcher die genannte Steuer- bzw. Regelvorrichtung bewirkt, daß die Winkelgeschwindigkeit w(t) einen Anfangswert besitzt, der kleiner als die, jedoch annähernd gleich der zur Erhaltung der baulich konstruktiven Integrität des genannten Rotormechanismus zulässigen maximalen Winkelgeschwindigkeit $w = w_y$ ist.

20. Apparatur nach den Ansprüchen 16, 17 oder 18, bei welcher die genannte Steuer- bzw. Regelvorrichtung bewirkt, daß die genannte Winkelgeschwindigkeit w(t) für alle Zeiten t bis zu dem genannten Zeitpunkt $t = T_c$ annähernd konstant einen Wert $w(t) = w_y$ besitzt.

**Revendications**

1. Procédé de centrifugation d'une solution d'échantillon (19) comprenant les étapes de :

supporter une solution d'échantillon dans un rotor d'une centrifugeuse, ladite solution d'échantillon ayant au moins dans celle-ci un composant soluté, faire tourner ladite solution d'échantillon dans ledit rotor à une vitesse de rotation variable dépendant du temps w autour d'un axe de rotation, étant de plus caractérisé par déterminer et automatiquement régler la vitesse de rotation w en une fonction du temps afin d'éviter une précipitation de ladite solution d'échantillon en dépendance de la tenue à la sédimentation et à la diffusion dudit composant soluté en une fonction de la vitesse de rotation et du temps.

2. Procédé de la revendication 1 dans lequel la tenue de sédimentation et de diffusion précitée comprend des concentrations dépendantes du temps $C_i$ (i = 1,2,...,N) du composant soluté à des positions radiales $r_i$ dans ladite solution d'échantillon par rapport à l'axe de rotation précité et un flux dépendant du temps $J_{i,i+1}$ dudit composant soluté de chaque position radiale $r_i$ à une position radialement adjacente $r_{i+1}$ dans ladite solution d'échantillon, et comprenant de plus les étapes de :

spécifier un jeu de conditions sur la tenue de sédimentation et de diffusion qui doivent être satisfaites, ledit jeu de conditions comprenant au moins une condition sur l'une des concentrations et le flux dudit composant soluté qui doit être satisfaite d'au moins une position radiale dans ladite solution d'échantillon afin d'éviter une précipitation dudit composant soluté de ladite solution d'échantillon, et

simuler ladite tenue de sédimentation et de diffusion dudit composant soluté de ladite solution d'échantillon en une fonction de vitesse de rotation et du temps, ladite simulation comprenant calculer, dans chacune d'une pluralité d'intervalles de temps successifs, le flux $J_{i,i+1}$ en une fonction de la vitesse de rotation w dudit composant soluté pendant l'intervalle de temps entre chaque paire de positions radialement adjacentes $r_i$ et $r_{i+1}$ dans ladite solution d'échantillon, et la concentration correspondante $C_i$ dudit composant soluté pendant l'intervalle de temps suivant successif à chaque position radiale $r_i$ dans ladite solution d'échantillon qui résulte dudit flux,

où ladite étape de déterminer et d'automatiquement régler la vitesse de rotation w comprend déterminer dans chacune de ladite pluralité d'intervalles de temps successifs, à partir de ladite tenue simulée de sédimentation et de diffusion, une vitesse de rotation maximum pendant ledit intervalle de temps qui satisfait ledit jeu spécifié de conditions et régler ladite vitesse de rotation variable dépendant du temps pour sensiblement égaliser la vitesse de rotation maximum la plus tardive qui a été déterminée.

3. Procédé de la revendication 1 dans lequel la solution d'échantillon précitée comprend un soluté et un solvant contenus dans un tube centrifuge, et comprenant de plus l'étape de diviser, en début de calcul, les contenus du tube centrifuge en un certain nombre de volumes en tranche avec chacun des volumes en tranche étant approximativement une distance radiale fixe $r=r_i$ (i=1,2,...,N) de l'axe de rotation, où l'un desdits volumes en tranche a la distance radiale associée la plus grande $r=r_N$ de l'axe de rotation, et l'étape de rotation comprend faire tourner un tube centrifuge autour de son axe de rotation à une vitesse angulaire w=w(t) en une fonction du temps t pour produire un flux $J_{i,i+1}(t)$ de soluté entre volumes en tranche adjacents de sorte qu'une concentration $C_i(t)$ de soluté dans un volume en tranche varie avec le temps, et ladite étape de déterminer comprend régler automatiquement la vitesse angulaire w(t) en une fonction du temps t de sorte que $C_N(t)$ du flux net du soluté dans le volume en tranche avec distance radiale associée $r=r_N$ calculée comme la vitesse angulaire w(t) pour rotation des tubes centrifuges, augmente avec le temps à une concentration critique prédéterminée $C_{crit}$ à une période pouvant être déterminée $t=T_c$ et n'augmente pas au dessus de la valeur $C_{crit}$ pour une période t supérieure à $T_c$.

4. Procédé de la revendication 1 avec ladite solution d'échantillon précitée comprenant un soluté et un solvant contenus dans un tube centrifuge et comprenant de plus une étape de diviser, dans des buts de calculs, les contenus du tube centrifuge en un certain nombre d'éléments de volumes en tranche avec chacun desdits éléments de volumes en tranche étant approximativement à une distance radiale fixe $r=r_i$ (i=1,2,...,N) de l'axe de rotation, où au moins l'un desdits éléments de volumes en tranche a une distance radiale associée la plus grande $r=r_N$ de l'axe de rotation, où ladite étape de faire tourner ladite solution d'échantillon dans ledit rotor comprend faire tourner le tube centrifuge autour de son axe de rotation à une vitesse angulaire w=w(t) en une fonction du temps t pour produire un flux dépendant du temps $J_{i-1,i}$ de particules de soluté entre des éléments de volumes en tranche adjacents $\Delta V_{i-1}$ et $\Delta V_i$ et un flux dépendant du temps $J_{i,i+1}$ de particules de soluté entre des éléments de volumes en tranche adjacents $\Delta V_i$ et $\Delta V_{i+1}$ de sorte que la concentration $C_i(t)$ de soluté dans un élément de volume en tranche $\Delta V_i$ varie avec le temps, et l'étape de détermination précitée comprend automatiquement régler la vitesse angulaire w(t) en une fonction du temps t de sorte que le flux net de particules de soluté dans l'élément de volume $\Delta V_i$, calculé en utilisant la vitesse angulaire w(t) pour rotation du tube centrifuge, varie avec le temps en une fonction prédéterminée f(t) du temps.

5. Procédé de la revendication 1 avec la solution d'échantillon précitée comprenant des premier et second solutés dans un solvant contenu dans un tube centrifuge et comprenant de plus l'étape de diviser, dans des buts de calcul, les contenus du tube centrifuge en un certain nombre de volumes en tranche, avec chacun desdits volumes étant approximativement à une distance radiale fixe $r=r_i$ (i=1,2,...,N) de l'axe de rotation, où au moins l'un desdits volumes en tranche a une distance radiale associée la plus grande $r=r_N$ de l'axe de rotation, où l'étape précitée de rotation de ladite solution d'échantillon dans un rotor comprend faire tourner le tube centrifuge autour de son axe de rotation à une vitesse angulaire w=w(t) en une fonction du temps t pour produire un flux net de premières particules de soluté A dans un volume en tranche prédéterminé, et un flux net de secondes particules de soluté B dans le même volume en tranche, l'étape de détermination précitée comprenant automatiquement régler la vitesse angulaire w(t) en une fonction du temps t de sorte que le rapport du flux net des premières particules de soluté A au flux net des secondes particules B dans le volume en tranche prédéterminé calculé en utilisant la vitesse angulaire w(t) pour rotation du tube centrifuge, varie avec le temps en une fonction prédéterminée f(t) de temps.

6. Procédé de la revendication 2 dans lequel le jeu précité de conditions comprend une condition indépendante de la concentration de la vitesse de rotation précitée w à une limite supérieure pour laquelle une limite de contrainte élastique du rotor précité n'est pas dépassée.

7. Procédé de la revendication 2 dans lequel au moins une condition est que pour i=k la concentration $C_k$ du composé de soluté précité à une position radiale spécifiée $r_k$ dans la solution d'échantillon précitée par rapport à l'axe de rotation précité varie selon une fonction spécifiée particulière de temps f(t).

8. Procédé de la revendication 7 dans lequel i=k=N, où $r_N$ est une position dans la solution d'échantillon précitée la plus éloignée de l'axe de rotation précité.

9. Procédé de la revendication 8 dans lequel pour i=N la concentration $C_N$, définie par la fonction précitée f(t), augmente pour la période $0<t<T_c$ jusqu'à ce que ladite concentration $C_N$ atteigne une valeur de q x $C_{crit}$ dans un intervalle de temps $T_c$, où q est une marge de sécurité spécifiée avec $0<q\ll1$ et $C_{crit}$ est une concentration critique à laquelle le composant de soluté précité précipite à partir de ladite solution d'échantillon, et où ladite concentration $C_N$ est sensiblement constante à q x $C_{crit}$ pour des intervalles de temps $t>T_c$, de la sorte ledit composant de soluté est empêché de se précipiter.

10. Procédé de la revendication 2 dans lequel ladite au moins une condition précitée est que pour i=k le flux $J_{k-1,k}$ du composant soluté précité d'une position radiale spécifiée $r_{k-1}$ à une position radialement adjacente $r_k$ dans la solution d'échantillon précitée varie selon une fonction particulière de temps f(t).

11. Procédé de la revendication 7 ou 10 dans lequel i=k=N où $r_N$ est la position dans la solution d'échantillon précitée la plus éloignée de l'axe de rotation précité.

12. Procédé de la revendication 11 dans lequel pour i=N le flux $J_{N-1,N}$, défini par la fonction précitée f(t), est sensiblement nul pour le temps $t>T_c$ après un intervalle de temps $T_c$ dans lequel la concentration $C_N$ dans le composant de soluté précité à la position spécifiée précitée $r_N$ atteint une valeur de q x $C_{crit}$, où q est une marge de sécurité spécifiée avec $0<q\leq1$ et $C_{crit}$ est une concentration critique à laquelle le composant de soluté se précipite de la solution d'échantillon précitée.

13. Procédé de la revendication 1 comprenant de plus l'étape d'amener la vitesse angulaire précitée w(t) à avoir une valeur initiale qui est inférieure, mais approximativement égale, à la vitesse angulaire maximum w = $w_y$ permise pour préserver l'intégrité structurelle du mécanisme de rotor précité.

14. Procédé de la revendication 1 comprenant de plus l'étape de maintenir la vitesse angulaire précitée w(t) approximativement constante à w(t) = $w_y$ pour toutes les périodes t jusqu'à ladite période t = $T_C$.

15. Dispositif centrifugeuse comprenant :

un rotor (32) pour supporter une solution d'échantillon (19) pour tourner autour d'un axe de rotation, ladite solution d'échantillon ayant au moins dans celle-ci un composant soluté, un moyen d'entraînement (30) pour entraîner en rotation ladite solution d'échantillon à une vitesse de rotation variable dépendante du temps autour de l'axe de rotation, étant de plus caractérisé par un contrôleur (34) pour régler une vitesse de rotation en une fonction du temps pour éviter une précipitation dudit composant soluté de ladite solution d'échantillon en dépendance de la tenue de sédimentation et de diffusion dudit composant soluté en une fonction de la vitesse de rotation, du temps et de la position radiale dans ladite solution d'échantillon par rapport audit axe de rotation.

16. Dispositif de la revendication 15 dans lequel la solution d'échantillon précitée comprend un solvant et un soluté avec le rotor tournant la solution d'échantillon autour de l'axe de rotation, le rotor ayant au moins un volume en tranche contenant ladite solution d'échantillon à une distance radiale $r_N$ de l'axe de rotation qui est au moins aussi grande qu'une distance radiale $r_i$ (i=1,2,...,N) de l'axe de rotation de tout autre volume en tranche du rotor, avec le moyen d'entraînement, relié au rotor, pour entraîner en rotation le rotor autour de l'axe de rotation à une vitesse angulaire variant avec le temps w=w(t) pour produire un flux de particules de soluté entre des portions différentes du rotor, où le contrôleur est relié au moyen d'entraînement pour automatiquement régler la vitesse angulaire w(t) en une fonction du temps t, aussi le flux net Ji de particules de soluté dans tout volume en tranche varie en une fonction prédéterminée de temps f(t).

17. Dispositif de la revendication 16 dans lequel le contrôleur règle la vitesse angulaire w(t) en une fonction du temps t de sorte qu'une concentration $C_N$ de particules de soluté dans le volume en tranche avec la distance radiale $r_N$ augmente avec le temps à une concentration prédéterminée $C_{crit}$ à une période pouvant être déterminée $t=T_c$ et n'augmente pas au dessus de la valeur $C_{crit}$ pour toute période supérieure à $T_c$.

18. Dispositif de la revendication 16 avec la solution d'échantillon précitée comprenant un solvant et des premier et second solutés, le rotor ayant un certain nombre de volumes en tranche à des distances radiales diverses contenant une solution d'échantillon dont la distance radiale $r_N$ de l'axe de rotation est au moins aussi grande que la distance radiale $r_i$ de l'axe de rotation de tout autre élément de volume du rotor, où ledit contrôleur est relié au moyen d'entraînement pour automatiquement régler la vitesse angulaire w(t) en une fonction du temps (t) de sorte que le rapport du flux net de premières particules de soluté dans un volume en tranche prédéterminé au flux net de secondes particules de soluté dans le même élément de volume prédéterminé varie en une fonction prédéterminée de temps f(t).

19. Dispositif de la revendication 16, 17 ou 18, dans lequel le contrôleur précité amène la vitesse angulaire précitée w(t) à avoir une valeur initiale qui est inférieure, mais approximativement égale, à la vitesse angulaire maximum $w=w_y$ permise pour préserver l'intégrité structurelle du mécanisme de rotor précité.

20. Dispositif de la revendication 16, 17 ou 18, dans lequel le contrôleur précité amène la vitesse angulaire précitée w(t) à être approximativement constante à $w(t)=w_y$ pour toutes les périodes t jusqu'à la période précitée $t=T_c$.

# FIG. 1

# FIG. 2

INITIALLY RUN AT $W_Y$ AND INITIAL CONCENTRATION

CALCULATE $J_{i-1,i}$ ; $C_i$

$C_S C_I$ $C_N < qC_{crit}$ ?

SOLVE $J_{N-1,N} = 0$ FOR $W_O$ TO MAINTAIN $C_N$ CONSTANT

REDUCE ROTOR SPEED TO $W_O$

CALCULATE $J_{i-1,i}$ ; $C_i$

$W_O > W_P$ ?

MAINTAIN ROTOR SPEED AT $W_P$

*FIG. 3*

*FIG. 4*

*FIG. 5*